# EUROPÄISCHE PATENTSCHRIFT

(11) **EP 4 092 573 B1**
(45) Veröffentlichungstag und Bekanntmachung des Hinweises auf die Patenterteilung: **30.07.2025**
(21) Anmeldenummer: 22184847.6
(22) Anmeldetag: 02.06.2017
(51) Int. Cl.: G06K 19/07, H04B 5/00, H05B 47/19

(54) **ADRESSZUWEISUNG UND KONFIGURIERUNG VON KOMPONENTEN EINES BELEUCHTUNGSSYSTEMS MITTELS TRANSPONDER**
ADDRESS ALLOCATION AND CONFIGURATION OF COMPONENTS OF A LIGHTING SYSTEM USING TRANSPONDERS
AFFECTATION D'ADRESSE ET CONFIGURATION DES COMPOSANTS D'UN SYSTÈME D'ÉCLAIRAGE AU MOYEN DES TRANSPONDEURS

(30) Priorität: 13.06.2016 DE 102016210414
(43) Veröffentlichungstag der Anmeldung: 23.11.2022
(62) Teilanmeldung aus: 21199281.3
(73) Patentinhaber: Zumtobel Lighting GmbH, 6850 Dornbirn (AT)
(72) Erfinder: Mayr, Gregor, 6974 Gaißau (AT); Klockner, Bernhard, 6850 Dornbirn (AT)
(74) Vertreter: Beder, Jens

(56) Entgegenhaltungen:
- WO-A1-2006/016845
- DE-A1- 102007 036 835
- DE-A1- 102013 205 896
- US-A1- 2014 068 089
- US-A1- 2015 342 011

## Beschreibung

Die vorliegende Erfindung betrifft ein Sendegerät zur Adresszuweisung und/oder Konfigurierung eines Betriebsgeräts einer Notleuchte.

Beleuchtungssysteme können Komponenten wie Sensoren, Leuchtmittel oder Aktoren, Schaltern und Dimmer, aufweisen. Mit Hilfe von Betriebsgeräten für Leuchtmittel, wie Gasentladungslampen, Halogenlampen und insbesondere Leuchtdioden (LED), kann die Funktion der Leuchtmittel überwacht und können die Leuchtmittel gestartet und/oder gedimmt werden. Mittels Sensoren, welche z.B. Bewegungen von Objekten und/oder die Umgebungshelligkeit erfassen, können die Leuchtmittel bei An-/Abwesenheit einer Person automatisch ein-/ausgeschaltet werden bzw. das Dimmen der Leuchtmittel kann automatisch an die Umgebungshelligkeit angepasst werden.

Insbesondere Betriebsgeräte von Leuchten mit Leuchtdioden (LED) enthalten oft Steuereinrichtungen, welche Steuerdaten für die Einstellung von Betriebsparametern, wie zum Beispiel den maximalen Abgabestrom an die Leuchtdioden oder die Farbtemperatur, von außen empfangen können. In Beleuchtungssystemen, in denen die Komponenten zum Datenaustausch vernetzt sind, sind die Komponenten mit jeweils einer Steuereinrichtung verbunden, welche unter anderem den Datenaustausch während des Netzwerkbetriebs steuert und durch ihre eindeutige Zuordnung die Komponente im Netzwerk identifiziert.

Die US 2012/0306621 A1 offenbart eine Steuervorrichtung für eine in einem Beleuchtungssystem vernetzbare Komponente, die Daten an eine Schreibe- und Lesevorrichtung mittels eines Transponders drahtlos senden und empfangen kann. Der Transponder ist ein RFID (engl. radio-frequency identification)-Transponder, der mit einer Steuerungseinrichtung verbunden ist und eine von einer zentralen Steuereinheit auslesbare unverwechselbare Kennung (UID, user identification) aufweist. Diese Kennung wird dazu verwendet, die Komponenten bei der ersten Inbetriebnahme bzw. beim Einschalten des Beleuchtungssystems durch die zentrale Steuereinheit zu identifizieren, um ihnen automatisch Netzwerkadressen zuordnen zu können.

US2015342011 A1 offenbart ein Sendegerät, das die Firmware eines Betriebsgeräts programmieren kann.

Bei dem Beleuchtungssystem besteht jedoch das Problem, dass die Adresszuweisung erst nach dem Einschalten des Beleuchtungssystems erfolgt und der Installateur/Anwender des Beleuchtungssystems bei der automatischen Verwendung der RFID-Adressen keinen Einfluss auf die zugeordneten Adressen hat, wenn ihm die Kennung (UID) der jeweiligen Komponente bzw. des Transponders unbekannt ist. Zudem kann eine Parametrierung und Konfiguration der Komponenten durch den Installateur nicht vor dem ersten Einschalten oder der Inbetriebnahme erfolgen.

Der Erfindung liegt die Aufgabe zugrunde, eine Vorrichtung und ein Verfahren anzugeben, die die beschriebenen Probleme verringern. Aufgabe ist es insbesondere, ein Sendegerät und ein Verfahren bereitzustellen, mit denen die Steuervorrichtungen Komponenten eines Beleuchtungssystems in einfacher Weise vor der Inbetriebnahme adressiert und/oder konfiguriert werden können.

Diese Aufgabe wird gemäß den Merkmalen der unabhängigen Ansprüche gelöst.

Eine Steuervorrichtung weist für eine Komponente eines Beleuchtungssystems einen Transponder auf, der dazu ausgebildet ist, zumindest im ausgeschalteten Zustand der Steuervorrichtung Daten von einem Sendegerät zu empfangen und zu speichern, und eine Steuerungseinrichtung, die dazu ausgebildet ist, die in dem Transponder gespeicherten Daten zumindest nach dem Einschalten der Steuervorrichtung auszulesen und für die Steuerung bzw. Regelung der von der Steuervorrichtung zu steuernden bzw. zu regelnden Komponente zu verwenden, auf. Für alle Ausführungen im Zusammenhang mit der vorliegenden Erfindung wird einheitlich der Begriff des "Steuerns" verwendet. Dies umfasst aber auch sämtliche Formen der Regelung.

Somit kann die Steuervorrichtung und/oder die Komponente des Beleuchtungssystems bereits bei ihrer Montage im noch stromlosen Zustand durch den Monteur konfiguriert werden, so dass die Komponente bzw. das Beleuchtungssystem mit dem ersten Einschalten sofort den regulären Betrieb aufnehmen kann. Die Daten können hierzu zumindest Informationen zur Konfiguration der Steuervorrichtung selbst und/oder Informationen zur Konfiguration der von der Steuervorrichtung zu steuernden Komponente beinhalten, wobei die Steuerungseinrichtung dazu ausgebildet sein kann, die Steuervorrichtung und/oder die von der Steuervorrichtung zu steuernde Komponente entsprechend der Informationen zu konfigurieren.

Es ist auch möglich, dass der Monteur/Anwender zu vernetzenden Steuervorrichtungen des Beleuchtungssystems bereits bei ihrer Montage im stromlosen Zustand gewünschte Netzwerkadressen zuordnet, welche aus einem Montageplan hervorgehen. Die Daten können hierzu zumindest eine Adressierungs-Information, welche eine Netzwerkadresse anzeigt, mit der die Steuervorrichtung im Beleuchtungssystems zu identifizieren ist, beinhalten.

Die Steuervorrichtung kann dazu ausgebildet sein, die von der Steuervorrichtung zu steuernde Komponente unter Verwendung der empfangenen Steuerdaten zu steuern.

Der Transponder kann dazu ausgebildet sein, eine zumindest dem Transponder zugeordnete Identifizierungs-Information an das Sendegerät zu senden und mit der Identifizierungs-Information verknüpften Daten von dem Sendegerät zu empfangen, wobei die Steuerungseinrichtung dazu ausgebildet sein kann, die empfangenen Daten erst nach einer erfolgreichen Prüfung der mit den empfangenen Daten verknüpften Identifizierungs-Information zu verwenden.

Der Transponder kann ein RFID-Transponder oder ein NFC-Transponder sein.

Die Steuerungseinrichtung kann dazu ausgebildet sein, aktuell verwendete Steuerdaten, Informationen über aktuell gesetzte Konfigurierungen der Steuervorrichtung und/oder der von der Steuervorrichtung zu steuernden Komponente, eine aktuelle Netzwerkadresse der Steuervorrichtung und/oder Funktionsfehler der Steuervorrichtung und/oder der Komponente zu bestimmen und in einem Speicher des Transponders zu speichern, wobei der Transponder die gespeicherten Steuerdaten, Informationen und/oder die gespeicherte Netzwerkadresse an das Sendegerät übertragen kann. Dies ermöglicht eine Konfiguration, Wartung oder Fehlersuche der Komponente oder der Steuervorrichtung nach der Inbetriebnahme vor Ort.

Alternativ oder zusätzlich können voreingestellte Steuerdaten, voreingestellte Konfigurierungen der Steuervorrichtung und/oder der von der Steuervorrichtung zu steuernden Komponente und/oder eine voreingestellte Netzwerkadresse der Steuervorrichtung in dem Speicher des Transponders z.B. vom Hersteller abgelegt sein, so dass diese vor der Inbetriebnahme ausgelesen, dokumentiert, überprüft und ggf. geändert werden können. Es ist auch möglich, in dem Transponder Ersatzteilnummern zu speichern.

Die vorliegende Erfindung umfasst ein Sendegerät gemäß Anspruch 1.

Das Sendegerät weist eine Anzeige zum Anzeigen von zumindest einem Teil der bestimmten Daten und/oder eine Einrichtung zum Eingeben oder Auswählen von Daten durch einen Anwender auf. Die Bestimmungseinrichtung ist dann dazu ausgebildet, die Daten entsprechend der durch den Anwender eingegebenen bzw. ausgewählten Daten zu bestimmen.

Alternativ oder zusätzlich kann das Sendegerät eine Schnittstelle zum Empfangen von an den Transponder der Steuervorrichtung zu übertragenden Daten aufweisen, wobei die Bestimmungseinrichtung dann vorzugsweise dazu ausgebildet ist, die von der Schnittstelle empfangenen Daten als zu sendende Daten zu bestimmen.

Alternativ oder zusätzlich kann das Sendegerät Mittel zum Empfangen von Daten mit einem für die Datenübertragung an den Transponder der Steuervorrichtung inkompatiblen Kommunikationsprotokoll und ein Gateway zum Umsetzen des inkompatiblen Kommunikationsprotokolls in ein für die Datenübertragung an den Transponder der Steuervorrichtung kompatibles Kommunikationsprotokoll aufweisen, wobei die Bestimmungseinrichtung dazu ausgebildet sein kann, die von dem Gateway konvertierten Daten als zu sendende Daten zu bestimmen. Hiermit ist es möglich, Daten von mit unterschiedlichen Kommunikationsprotokollen arbeitenden Geräten (PC oder Mobiltelefon) über das Sendegerät zu dem Transponder bzw. der Steuervorrichtung zu übertragen. Die Bedienung kann dann bequem am PC, Smartphone oder Tablet PC erfolgen.

Die an den Transponder der Steuervorrichtung zu sendenden Daten können zumindest eine Adressierungs-Information beinhalten, welche eine Netzwerkadresse anzeigt, mit der die Steuervorrichtung im Beleuchtungssystems zu identifizieren ist, wobei die Bestimmungseinrichtung dazu ausgebildet sein kann, nach einer erfolgreichen Übertragung einer Adressierungs-Information an den Transponder der Steuervorrichtung automatisch eine neue Adressierungs-Information mit einer neuen Netzwerkadresse für eine Übertragung der neuen Adressierungs-Information an den Transponder einer anderen Steuervorrichtung zu erzeugen. Die erfolgreiche Übertragung kann dem Sendegerät von dem Transponder bekanntgegeben werden.

Zusätzlich kann das Sendegerät dazu ausgebildet sein, von dem Transponder für die Steuerung der Komponente aktuell gesetzte Steuerdaten, Informationen über aktuell gesetzte Konfigurierungen der Steuervorrichtung und/oder über aktuell gesetzte Konfigurierungen der von der Steuervorrichtung zu steuernden Komponente, eine aktuelle Netzwerkadresse und/oder Funktionsfehler der Steuervorrichtung oder der Komponente zu empfangen oder abzufragen.

Die Bestimmungseinrichtung kann dazu ausgebildet sein, eine Daten-Kopieroperation auszuführen, bei der zumindest die von dem Transponder empfangenen oder abgefragten Steuerdaten und/oder Informationen als an den Transponder einer anderen Steuervorrichtung zu sendende Daten von der Bestimmungseinrichtung bestimmt werden. Hiermit ist es möglich, auf einfache und schnelle Weise eine neue Steuervorrichtung zu konfigurierten, welche eine alte, defekte Steuervorrichtung ersetzen soll.

Das Sendegerät kann Mittel zum Bestimmen seiner Position und damit letztlich der Position der von der Steuervorrichtung zu steuernden Komponente und zum Verknüpfen der an den Transponder der Steuervorrichtung gesendeten Daten mit der bestimmten Position aufweisen. Alternativ oder zusätzlich kann die bestimmte Position an den Transponder der Steuervorrichtung gesendet und von diesem zur weiteren Verarbeitung gespeichert werden.

Die vorliegende Erfindung umfasst ein Verfahren gemäß Anspruch 2.

Nachfolgend wird die Erfindung anhand der beiliegenden Zeichnungen näher erläutert. Es zeigen:
Fig. 1 ein erstes Ausführungsbeispiel eines Beleuchtungssystems mit einer Steuervorrichtung und einem Sendegerät erster Ausführung gemäß der vorliegenden Erfindung,
Fig. 2 ein zweites Ausführungsbeispiel eines Beleuchtungssystems gemäß der vorliegenden Erfindung, und
Fig. 3 ein Ausführungsbeispiel eines weiteren Sendegeräts gemäß der vorliegenden Erfindung.

Komponenten mit gleichen Funktionen sind in den Figuren mit gleichen Bezugszeichen gekennzeichnet.

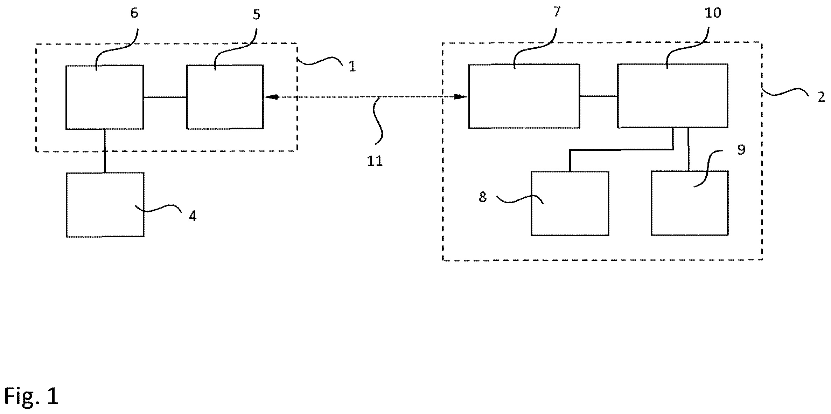

Fig. 1 zeigt eine vereinfachte schematische Darstellung eines Beleuchtungssystems mit einer Steuervorrichtung 1 und einem mobilen Sendegerät 2 insbesondere zur Vergabe von Netzwerkadressen gemäß der vorliegenden Erfindung. Die Steuervorrichtung 1 ist insbesondere ein Betriebsgerät zum Betreiben eines Leuchtmittels 4.

Das Leuchtmittel 4 kann eine Leuchtdiode (LED) oder mehrere LEDs umfassen. Die LEDs können anorganische oder organische LEDs sein. Die mehreren LEDs können in Serie oder parallel geschaltet sein. Die mehreren LEDs können auch in komplexeren Anordnungen verschaltet sein, beispielsweise in mehreren zueinander parallel geschalteten Reihenschaltungen.

Die Steuervorrichtung 1, also im dargestellten Beispiel das Betriebsgerät, kann ein Konstantstrom-Konverter, z.B. ein LED-Konverter sein, der aus einer Netzspannung (nicht gezeigt) einen für den Betrieb der LEDs nötigen Strom erzeugt, wenn er am Netz angeschlossen ist.

Die Steuervorrichtung 1 weist einen Transponder 5 und eine Steuerungseinrichtung 6 auf. Der Transponder 5 kann ein RFID-Transponder, insbesondere ein auf der RFID-Technologie basierender NFC-Transponder sein, der ein spezielles Kopplungsverfahren nutzt, dass auf gesonderte Frequenzbereiche und eine Kommunikation auf kurze Entfernung genormt ist. Der Transponder 5 kann ein passiver Transponder, der von dem Sendegerät 2 aus für eine Kommunikation mit Energie versorgt wird. In dem Transponder 5 können Daten in einem nicht flüchtigen, wiederbeschreibbaren Speicher gespeichert werden, die über die Verbindung 11 nur gelesen werden können (R/O) sowie Daten, die über die Verbindung 11 sowohl gelesen als auch überschrieben/geändert werden können (R/W).

Die Steuerungseinrichtung 6 kann mit dem Transponder 5 über einen seriellen Datenbus I²C (Inter-Integrated Circuit) verbunden sein und kann eine integrierte Halbleiterschaltung sein oder eine integrierte Halbleiterschaltung umfassen. Die Steuerungseinrichtung 6 kann als ein Prozessor, ein Mikroprozessor, ein Controller, ein Mikrocontroller oder eine anwendungsspezifische Spezialschaltung (ASIC) oder eine Kombination der genannten Einheiten ausgestaltet sein.

Das Sendegerät 2 dient dazu, die Steuervorrichtung 1 kontaktlos zu konfigurieren/parametrieren und Werte (Steuerdaten) auszulesen. Das Sendegerät 2 weist eine Sende- und Empfangseinheit 7 zum Senden und Empfangen von Daten zu/von dem Transponder 5, eine Anzeigeeinheit 8 zum Anzeigen der zu sendenden und/oder empfangenen Daten, eine Eingabeeinheit 9 zum Eingeben, Ändern und/oder Auswählen der Daten und eine mit der Sende- und Empfangseinheit 7, der Anzeigeeinheit 8 und der Eingabeeinheit 9 verbundene Steuereinheit 10 auf. Die Eingabeeinheit 9 kann in der Anzeigeeinheit 8 integriert sein (berührungsempfindlicher Bildschirm). Für den mobilen Einsatz ist das Sendegerät 2 mit einer internen Batterie (nicht gezeigt) ausgerüstet. Diese liefert auch die Energie für den Transponder 5, so dass Lese- und Schreibvorgänge auch ausgeführt werden können, wenn die Steuervorrichtung 1 nicht mit einer Netzspannung versorgt ist und auch selbst keine eigene Stromquelle besitzt.

Die Sende- und Empfangseinheit 7 stellt zu dem Transponder 5 eine drahtlose Verbindung 11 her. Für eine solche Kopplung/Verbindung erzeugt die Sende- und Empfangseinheit 7 magnetische Wechselfelder mit geringer Reichweite oder hochfrequente Radiowellen, wodurch der (passive) Transponder 5 mit Energie versorgt wird. Die Steuereinheit 10 ist ein Prozessor, auf dem eine Software (Mikroprogramm oder Anwendungssoftware, App) ausführbar ist, die den Lese- und Schreibprozess aber auch die Auswahl der zu übertragenden Daten steuert.

Über die drahtlose Verbindung 11 überträgt das Sendegerät 2 Daten für die Parametrierung/Konfiguration des Betriebsgeräts, welche in einem Speicher (nicht gezeigt) des Transponders 5 abgespeichert werden. Die Datenübertragung kann im stromlosen Zustand der Steuervorrichtung 1 erfolgen. Wird die Steuervorrichtung 1, zum Beispiel bei der Inbetriebnahme, mit Strom versorgt, liest die Steuerungseinrichtung 6 die gespeicherten Daten aus dem Speicher des Transponder 5 aus und parametriert/konfiguriert das Betriebsgerät entsprechend der ausgelesenen Daten.

Die Steuervorrichtung 1 und das Leuchtmittel 4 können in einem Gerät, zum Beispiel einer eine Batterie aufweisenden Notleuchte, intergiert sein. Notleuchten werden meist in Dauerschaltung (bei Netzbetrieb EIN) oder in Bereitschaftsschaltung (bei Netzbetrieb AUS, nur bei Stromausfall EIN) betrieben. Oft sind die Notleuchten auf Dauerschaltung voreingestellt.

Um von der standardmäßigen Dauerschaltung auf Bereitschaftsschaltung zu wechseln, muss, insbesondere bei nicht-netzwerkfähigen Leuchten oder solchen, die jedenfalls nicht in einem Netzwerk betrieben werden, in der Notleuchte normalerweise eine Drahtbrücke entfernt werden, was sehr zeitaufwändig und fehleranfällig ist. Gemäß der vorliegenden Erfindung kann das Auswählen/Konfigurieren von Dauerschaltung oder Bereitschaftsschaltung mittels der Eingabeeinheit 9 des Sendegeräts 2 durch den Anwender erfolgen, wobei entsprechende Daten von der Steuereinheit 10 erzeugt und von der Sende- und Empfangseinheit 7 an den Transponder 5 gesendet werden. Eine solche Konfiguration kann mit dem Sendegerät 2 selbst bei einer Vielzahl von Notleuchten schnell erfolgen. Da die Datenübertagung auch im stromlosen oder ungeladenen Zustand der Notleuchte möglich ist, kann die Konfiguration an einem von dem beabsichtigten Montageort der Notleuchte verschiedenen Ort, zum Beispiel in einem Lager, mit einem stationären Sendegerät 2 durchgeführt werden.

Nach der Inbetriebnahme oder während des Betriebs kann die Steuerungseinrichtung 6 der Steuervorrichtung 1 die aktuell gesetzten Steuerdaten (Betriebsparameter) in dem Speicher des Transponders 5 abspeichern. Die Sende- und Empfangseinheit 7 kann die gespeicherten Steuerdaten ggf. auch im ausgeschalteten Zustand der Steuerungseinrichtung 6 auslesen und, wenn nötig, ändern. Die Steuereinheit 10 zeigt hierzu die empfangenen Steuerdaten auf der Anzeigeeinheit 8 an und führt ggf. Änderungen an den angezeigten Steuerdaten entsprechend der mittels der Eingabeeinheit 9 von einem Nutzer empfangenen Eingaben aus. Die geänderten oder neu gesetzten Steuerdaten werden über die aufgebaute Verbindung 11 zu dem Transponder 5 übertragen und in diesem gespeichert. Die Steuerungseinrichtung 6 fragt die neuen Steuerdaten von dem Transponder ab und verwendet sie.

Zur Erhöhung der Sicherheit, insbesondere, damit keine unbefugten Personen Daten an die Steuervorrichtung 1 senden oder abfragen können, kann vor der Datenübertragung eine gegenseitige Authentifizierung durchgeführt werden.

Es ist auch möglich zumindest einige der zu übertragenden Daten zu verschlüsseln bzw. mit verschiedenen Schlüsseln zu verschlüsseln. Diese müssen dann von der Steuervorrichtung 1 bzw. dem Sendegerät 2 entschlüsselt werden.

Bei der Verschlüsselung können diversifizierte Schlüssel verwendet werden. Dabei wird ein privater Schlüssel mit einer eindeutigen **ID** (z.B. der Seriennummer des Transponders) verknüpft und damit ein diversifizierter privater Schlüssel erzeugt. Dies hat den Vorteil dass, wenn der diversifizierte Schlüssel geknackt wird, nur der Code für ein Gerät offenliegt.

Alternativ oder zusätzlich können verschiedenen Daten unterschiedliche Berechtigungen für eine Änderung zugewiesen werden, so dass nur bestimmte Personen bzw. bestimmte Sendegeräte 2 bestimmte Konfigurationen/Adressierungen ändern oder setzen können. Hierfür werden zumindest einige der Daten in unterschiedliche Berechtigungsklassen eingeteilt und eine eine Befugnis für bestimmte Berechtigungsklassen anzeigende Berechtigungsinformation von dem Sendegerät 2 an den Transponder 5 übermittelt. Die Steuerungseinrichtung 6 bestimmt die Klasse oder Klassen der empfangenen Steuerdaten und prüft die Befugnis für die bestimmte Klasse oder Klassen mittels der empfangenen Berechtigungsinformation, wobei nur die Steuerdaten verwendet werden, welche einer Berechtigungsklasse entsprechen, für die eine Befugnis entsprechend der Berechtigungsinformation vorliegt. Alternativ können die Steuerdaten entsprechend ihrer jeweiligen Berechtigungsklasse von der Steuerungseinrichtung 6 und/oder der Steuereinheit 10 verschlüsselt werden.

Die vorliegende Erfindung kann besonders vorteilhaft bei der Vergabe einer Adresse an eine zu vernetzende Komponente wie z.B. einer Leuchte mit Betriebsgerät eines Beleuchtungssystems eingesetzt werden. Damit die Komponenten eines Beleuchtungssystems untereinander und/oder mit einer zentralen Steuereinheit während der Initialisierung und/oder des Betriebs Daten übertagen können, benötigt jede Komponente eine Netzwerkadresse. Diese Adresse kann gemäß der vorliegenden Erfindung auf einfache Weise vor der Inbetriebnahme der jeweiligen Komponenten vergeben werden.

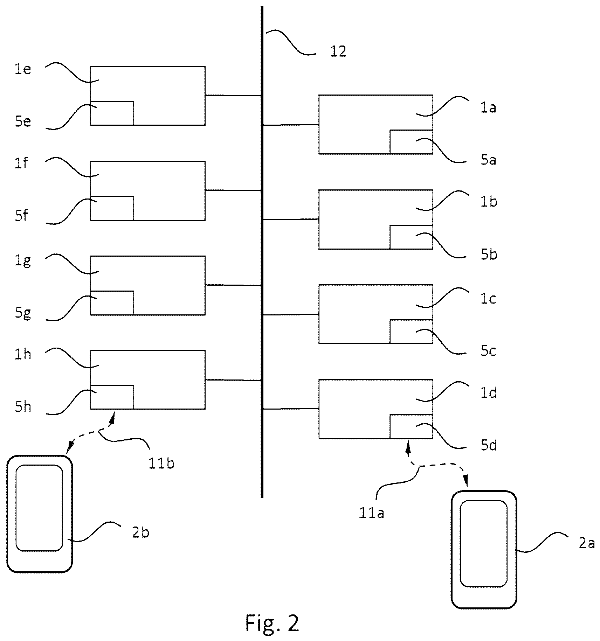

Fig. 2 zeigt in einem Ausschnitt ein zweites Ausführungsbeispiel eines Beleuchtungssystems gemäß der vorliegenden Erfindung. Das in Fig. 2 gezeigte Beleuchtungssystem enthält zwei Sendegeräte 2a, 2b und eine Vielzahl von Komponenten 1a..1h, die Sensoren, Leuchten oder Aktoren, Schalter und/oder Dimmer sein können und über ein Bussystem 12 miteinander verbindbar sind.

Jede Komponente 1a..1h weist einen Transponder 5a..5h, der mit den Sendegeräten 2a und 2b Daten austauschen kann und eine Steuerungsvorrichtung 1 (nicht gezeigt) zum Steuern der jeweiligen Komponente 1a..1h auf. Es ist auch möglich, dass eine gemeinsame Steuerungsvorrichtung 1 mehrere Komponenten 1a..1h steuert.

Die Sendegeräte 2a und 2b werden in dem gezeigten Beispiel dazu verwendet, den Komponenten 1a..1h ihre Adressen zu vergeben, damit sie über das Bussystem 12 ansprechbar sind, wobei mit dem Sendegerät 2a die Komponenten 1a..1h auch konfiguriert/parametriert werden. Hierzu sind den Sendegeräten 2a und 2b unterschiedliche Befugnisse zugeteilt. Beide Sendegeräte 2a, 2b sind befugt Daten mit Informationen zur Adressierung einer Steuervorrichtung 1/ Komponente 1a..1h zu übertragen, während z.B. nur das Sendegerät 2a befugt ist, Daten für die Konfiguration einer Steuervorrichtung 1/Komponente 1a..1h zu übertragen.

Die Adressierungs-Information gibt eine Netzwerkadresse an, mit der die von der Steuervorrichtung 1 zu steuernde Komponente 1a..1h gegenüber anderen Komponenten 1a..1h des Beleuchtungssystems und/oder einer Vorrichtung zur Konfiguration des Beleuchtungssystems (nicht gezeigt) zu identifizieren ist.

Die Adressierungs-Information kann vom Monteur/Elektriker in die Sendegeräte 2a, 2b eingegeben oder in diesen bereits gespeichert sein und vom Elektriker ausgewählt werden. Die Adressierungs-Information kann Informationen über den Standort/Position und/oder die Funktion der jeweiligen Komponente 1a..1h anzeigen bzw. enthalten oder mit solchen Positionsinformationen verknüpft werden, wie zum Beispiel: Schalter 1 im Raum 2 (=S1/R2) oder Leuchte im Raum 5, vorne rechts (=L/R5/VR), damit die Komponente 1a..1h später über eine zentrale Steuereinheit vom Elektriker für die Konfiguration, welcher Schalter welche Leuchte zu schalten hat, leichter zu identifizieren ist.

Ist die eingegebene oder ausgewählte Adressierungs-Information an den Transponder 5a..5h übertragen worden, kann diese Adressierungs-Information in dem Sendegerät 2a, 2b gelöscht oder für eine weitere Übertagung gesperrt werden, um eine doppelte Vergabe der Adresse zu verhindern. Hierzu könnte das die Adressierungs-Information übertragende Sendegerät 2a, 2b dem anderen Sendegerät 2a, 2b über eine Funkverbindung anzeigen, welche Adressierungs-Information bereits von ihm vergeben wurde.

Alternativ kann die zu vergebende Adressierungs-Information in einem Rechnernetz (Cloud) oder Server, auf das/den zumindest ein Sendegerät 2a, 2b zugreifen kann, gespeichert sein. Dieses Sendegerät 2a, 2b könnte auch als Smartphone ausgeführt sein. Dort läuft dann eine entsprechende Applikation und das Smartphone ist mit einer zum Transponder 5 kompatiblen Sendevorrichtung 7 ausgerüstet.

Bei größeren Beleuchtungssystemen muss der Monteur/Elektriker in einem Gebäudeplan dokumentieren, welche Leuchte er welcher Adresse zugewiesen hat. Dieser Schritt ist nötig, damit der Anwender/Benutzer die Leuchte beim Konfigurieren des Beleuchtungsrhythmus findet, die er gerne bedienen oder einrichten möchte. Das heißt auch, dass der Bediener neben dem Steuersystem auch den Gebäudeplan benötigt. Der Gebäudeplan kann auf den Sendegeräten 2a, 2b angezeigt oder mit Hilfe dieser erstellt werden. Es ist auch möglich, dass der Gebäudeplan mit einer entsprechenden Benutzeroberfläche aus dem Rechnernetz (Cloud) oder von dem Server zu dem Sendegerät 2a, 2b (Smartphone) übertagen wird.

Durch entsprechendes Antippen des auf der Anzeigeeinheit 8 (berührungsempfindlicher Bildschirm) dargestellten Gebäude-/Raumplans kann der Elektriker die Position markieren, an der sich die Komponente 1a..1h (Leuchte, Schalter oder Bewegungsmelder), der gerade eine Netzwerkadresse zugewiesen wird, befindet. Nach der Übertragung der Adressierungs-Information an den Transponder 5a..5h wird die Adressierungs-Information mit der durch Antippen eingegebenen Position verknüpft und gespeichert. Somit wird automatisch ein grafisches Anlagenabbild in einem bestehenden Gebäudeplan erreicht.

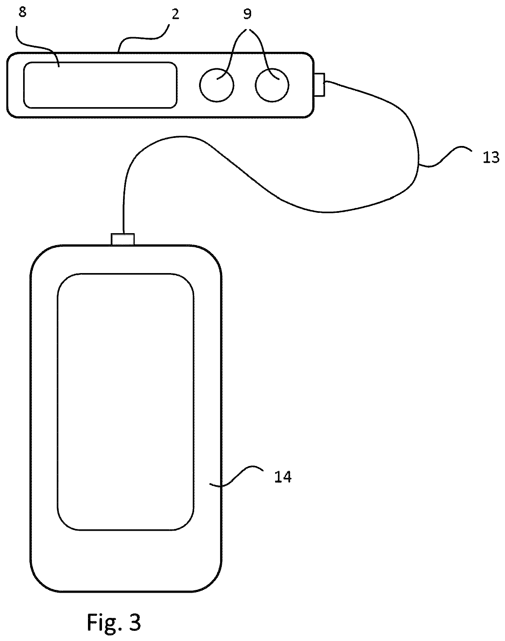

Das Sendegerät 2a, 2b kann gleichzeitig als mobiles Bediengerät dienen. Hierzu kann der Benutzer über ein entsprechendes Login auf das in dem Rechnernetz (Cloud) oder in dem Server abgelegte Anlagenabbild zugreifen und die Beleuchtung direkt ansteuern. Bei einer solchen Funktionalität ist es vorteilhaft, wenn das Sendegerät als Smartphone ausgeführt ist oder über ein solches betrieben wird, wie nachfolgend unter Bezugnahme auf Figur 3 erläutert wird.

Tippt der Benutzer in einer grafischen Benutzeroberfläche eine dort in einem Plan dargestellte Komponente 1a..1h, wie eine Leuchte an, wird z.B. ein Slider angezeigt, mit dem Helligkeit oder Farbtemperatur einstellbar sind. Nach der Eingabe/Änderung der Helligkeit bzw. Farbtemperatur, sendet Sendegerät 2a, 2b drahtlos den Stellbefehl mit der zugehörigen Adresse (Adressierungs-Information) entweder über einen Router an einen Controller (drahtgebundenes Lichtmanagementsystem) oder direkt an die Leuchte (wireless-System).

Für eine Bestimmung der Positionen der Komponenten 1a..1h für eine Zuordnung der Adressierungs-Informationen können die Sendegeräte 2a, 2b GPS-Empfänger aufweisen.

Zusätzlich können, da im gebäudeinneren GPS-Signale meist nicht zur Verfügung stehen, in den Sendegeräten 2a, 2b Sensoren für eine Ermittlung einer Position des Geräts in Gebäuden (Indoor Positioning), wie Beschleunigungssensoren und Gyroskope auf Mikrosystem-Basis (micro-electro-mechanical systems, MEMS) verwendet werden. Das letzte zur Verfügung stehende GPS-Signal kann dabei als Ausgangsposition mit den Daten der Mikroelektronik-Sensoren während der Bewegung verknüpft werden, um genaue Positionsdaten zu ermitteln. Die dafür nötige Sensorik ist meist in Mobiltelefonen (Smartphone) immer öfter bereits enthalten.

Das mit dem oben beschrieben Positionssensor ausgestattete Sendegerät 2a, 2b erfasst fortwährend die Position des Elektrikers bzw. des von ihm mitgeführten Geräts im Gebäude und sendet die Adressierungs-Information zusammen mit der ermittelten Sende-/Komponentenposition an den Transponder 5a..5h. Die in dem Transponder 5a..5h gespeicherten Daten können während der Inbetriebnahme dann an eine zentrale Steuereinheit des Beleuchtungssystems ausgelesen werden. Eine entsprechende Software kann dann aus diesen Daten automatisch ein grafisches Anlagenabbild erstellen, bei dem jede Komponente 1a..1h in einem Gebäude/Raum in der richtigen Position angeordnet ist.

Alternativ oder zusätzlich kann das grafische Anlagenabbild von dem Sendegerät 2a, 2b erstellt und angezeigt werden.

Fig. 3 zeigt ein weiteres Ausführungsbeispiel eines Sendegeräts 2 gemäß der vorliegenden Erfindung. Das Sendegerät 2 weist wiederum die Anzeigeeinheit 8, welche ein kostengünstiges zweizeiliges LCD-Display mit einer 2x7-Segment-Anzeige sein kann, und die Eingabeeinheit 9 mit zwei Tasten auf. Mit der Eingabeeinheit 9 kann eine gewünschte Adresse oder Konfiguration eingestellt oder ausgewählt werden, welche an den Transponder 5 zu übertragen ist. Die Übertragung wird einfach dadurch ausgelöst, dass das Sendegerät 2 in Empfangsreichweite des Transponders 5 gebracht wird. Das Sendegerät 2 ist somit sehr kompakt und könnte in ein anderes Gerät, wie eine kleine Taschenlampe, integriert werden. Umgekehrt ist auch die Integration einer LED z.B. möglich, so dass das Sendegerät um ein Taschenlampenfunktion erweitert wird.

Mit einer Schnittstelle (z.B. Mikro-USB oder Lightning Interface) ist das Sendegerät 2 über eine Kabelverbindung 13 mit einem Schreibe- und Lesegerät 14, das ein Smartphone oder Tablet sein kann, verbindbar. Über diese Verbindung kann das Sendegerät 2 an einen Transponder 5 zu übertragende Daten empfangen und aus einem Transponder 5 ausgelesene Daten an das Schreibe- und Lesegerät 14 senden. Die Datenübertragung zwischen dem Schreibe- und Lesegerät 14 und dem Sendegerät 2 könnte auch über eine Funkverbindung (z.B. Bluetooth) erfolgen.

Das Sendegerät 2 dient in diesem Fällen als Gateway, welches eine Datenübertragung zwischen dem Transponder 5 und dem Schreibe- und Lesegerät 14, das selbst keine Daten an den Transponder 5 senden oder von ihm empfangen kann, ermöglicht. Das Sendegerät 2 kann Mittel zum Umsetzen einer Vielzahl von inkompatiblen Kommunikationsprotokollen in ein für die Datenübertragung an den Transponder 5 kompatibles Kommunikationsprotokoll aufweisen, so dass unterschiedliche Schreibe- und Lesegeräte 14 mittels des Sendegeräts 2 mit dem Transponder 5 verbindbar sind.

Das Schreibe- und Lesegerät 14 hat ein größeres Display und kann das oben beschriebenen Anlagenabbild erzeugen und darstellen. Bei Verwenden der in der Figur 3 dargestellten Konfiguration kann insbesondere die vollständige Bedienung über das Schreibe- und Lesegerät 14 erfolgen. Dieses ist hierzu mit einer entsprechenden Software ausgestattet.

Das Sendegerät 2 oder das Schreibe- und Lesegerät 14 kann dazu ausgebildet sein, Informationen über Funktionsfehler der Komponente 1a..1h, welche von der Steuerungseinrichtung 6 erfasst und in dem Transponder 5 gespeichert wurden, abzufragen. In dem Transponder 5 können zudem Ersatzteilnummern hinterlegt sein.

Oft werden bei den Komponenten 1a..1h eines Beleuchtungssystems Fehler und die Information, welches Bauteil defekt ist, nur über ein Blinkmuster der Status-LED angezeigt, so dass der Fehlertyp oder das Bauteil nur über ein Datenblatt entziffert werden kann, das aber vor Ort meist nicht verfügbar ist. Auch muss die passende Ersatzteil-Artikelnummer erst nachgeschlagen oder beim zuständigen Vertriebsmitarbeiter angefragt werden.

Sind in dem Transponder 5 die oben genannten Informationen gespeichert, kann das Sendegerät 2 oder das Schreibe- und Lesegerät 14 diese auch bei einem Defekt/Stromausfall auslesen und das richtige Ersatzteil ermitteln. Über eine weitere Verbindung kann das Datenblatt des Ersatzteils ermittelt und/oder Vertriebskontakt zur Bestellung hergestellt werden.

Wird eine defekte Komponente 1a..1h ausgetauscht, müssen die Adresse und andere Einstellungen, wie Schaltungsart, Dimmlevel, Start der Funktionstests usw., auf die neue Komponente 1a..1h übertragen werden. Gemäß einem Ausführungsbeispiel der vorliegenden Erfindung sind zumindest einige der zu übertragenden Daten in dem Transponder 5 gespeichert und das Sendegerät 2 weist eine Daten-Kopierfunktion auf, mit der die gespeicherten Daten auf die neue Komponente 1a..1h bzw. deren Transponder 5 übertragen werden können.

Die beschriebenen Ausgestaltungen, wie zum Beispiel die Verschlüsselung oder Authentifizierung, sind nicht auf das jeweilige Ausführungsbeispiel beschränkt und können auch auf andere der beschriebenen Ausführungsbeispiele angewendet werden.

## Patentansprüche

1. Sendegerät (2) zum Senden von Steuerdaten an einen Transponder (5) eines Betriebsgeräts (1) einer Notleuchte, wobei
die Notleuchte bei Netzbetrieb eingeschaltet ist, wenn die Notleuchte in Dauerschaltung betrieben wird;
die Notleuchte bei Netzbetrieb ausgeschaltet und bei Stromausfall eingeschaltet ist, wenn die Notleuchte in Bereitschaftsschaltung betrieben wird;
das Sendegerät (2) eine Steuereinheit (10), einen Sender (7), eine Anzeigeeinheit (8) und eine Eingabeeinheit (9) aufweist, **dadurch gekennzeichnet, dass**
die Eingabeeinheit (9) zum Eingeben oder Auswählen von Dauerschaltung oder Bereitschaftsschaltung durch einen Anwender ausgebildet ist,
die Steuereinheit (10) dazu ausgebildet ist, die Steuerdaten für eine Konfiguration des Betriebsgeräts (1) entsprechend der von dem Anwender eingegeben bzw. ausgewählten Dauerschaltung oder Bereitschaftsschaltung zu erzeugen,
der Sender (7) dazu ausgebildet ist, die erzeugten Steuerdaten an den Transponder (5) des Betriebsgerätes (1) zu senden,
der Sender (7) dazu ausgebildet ist, eine Netzwerkadresse, mit der die Notleuchte gegenüber anderen Komponenten (1a..1h) eines Beleuchtungssystems identifizierbar ist, an den Transponder (5) des Betriebsgerätes (1) zu senden,
die Anzeigeeinheit (8) einen berührungsempfindlichen Bildschirm zum Anzeigen eines Gebäude-/Raumplans und zum Markieren der Position der Notleuchte in dem angezeigten Gebäude-/Raumplan durch Antippen des berührungsempfindlichen Bildschirms durch den Anwender aufweist, und
die Steuereinheit (10) dazu ausgebildet ist, die Netzwerkadresse mit der markierten Position zu verknüpfen und zu speichern.

2. Verfahren zum Senden von Steuerdaten von einem Sendegerät (2) an einen Transponder (5) eines Betriebsgeräts (1) einer Notleuchte mit den Schritten:
Eingeben oder Auswählen von Dauerschaltung oder Bereitschaftsschaltung, in der die Notleuchte betreibbar ist, durch einen Anwender mittels einer Eingabeeinheit (9) des Sendegerätes (2), wobei die Notleuchte bei Netzbetrieb eingeschaltet ist, wenn die Notleuchte in Dauerschaltung betrieben wird, und die Notleuchte bei Netzbetrieb ausgeschaltet und bei Stromausfall eingeschaltet ist, wenn die Notleuchte in Bereitschaftsschaltung betrieben wird;
Erzeugen der Steuerdaten von einer Steuereinheit (10) des Sendegerätes (2) für eine Konfiguration des Betriebsgeräts (1) entsprechend der von dem Anwender eingegeben bzw. ausgewählten Dauerschaltung oder Bereitschaftsschaltung; und
Senden der Steuerdaten von einem Sender (7) des Sendegerätes (2) an den Transponder (5) des Betriebsgerätes (1), wobei das Verfahren zusätzlich folgende Schritte aufweist:
Senden einer Netzwerkadresse, mit der die Notleuchte gegenüber anderen Komponenten (1a..1h) eines Beleuchtungssystems identifizierbar ist, von dem Sender (7) des Sendegerätes (2) an den Transponder (5) des Betriebsgerätes (1),
Anzeigen eines Gebäude-/Raumplans auf einem berührungsempfindlichen Bildschirm des Sendegeräts (2),
Detektieren einer Operation des Anwenders zum Markieren der Position der Notleuchte in dem angezeigten Gebäude-/Raumplan durch Antippen des berührungsempfindlichen Bildschirms, und
Verknüpfen der Netzwerkadresse mit der markierten Position und Speichern der mit der markierten Position verknüpften Netzwerkadresse durch die Steuereinheit (10).

## Claims

1. Transmitting device (2) for transmitting control data to a transponder (5) of an operating device (1) of an emergency light,
the emergency light being switched on during mains operation if the emergency light is operated in maintained mode;
the emergency light being switched off during mains operation and switched on in the event of a power failure if the emergency light is operated in standby mode;
the transmitting device (2) having a control unit (10), a transmitter (7), a display unit (8) and an input unit (9), **characterized in that**
the input unit (9) is designed for entering or selecting maintained mode or standby mode by a user,
the control unit (10) is designed to generate the control data for a configuration of the operating device (1) according to the maintained mode or standby mode entered or selected by the user,
the transmitter (7) is designed to transmit the generated control data to the transponder (5) of the operating device (1),
the transmitter (7) is designed to transmit a network address, with which the emergency light can be identified from other components (1a..1h) of a lighting system, to the transponder (5) of the operating device (1),
the display unit (8) has a touch-sensitive screen for displaying a building/room plan and for marking the position of the emergency light in the displayed building/room plan by the user tapping the touch-sensitive screen, and
the control unit (10) is designed to link the network address to the marked position and to store the network address.

2. Method for transmitting control data from a transmitting device (2) to a transponder (5) of an operating device (1) of an emergency light, comprising the following steps:
entering or selecting maintained mode or standby mode, in which the emergency light is operable, by a user by means of an input unit (9) of the transmitting device (2), wherein the emergency light is switched on during mains operation if the emergency light is operated in maintained mode, and the emergency light is switched off during mains operation and switched on in the event of a power failure if the emergency light is operated in standby mode;
generating the control data from a control unit (10) of the transmitting device (2) for a configuration of the operating device (1) according to the maintained mode or standby mode entered or selected by the user; and
transmitting the control data from a transmitter (7) of the transmitting device (2) to the transponder (5) of the operating device (1), wherein the method additionally comprises the following steps:
transmitting a network address, with which the emergency light can be identified from other components (1a..1h) of a lighting system, from the transmitter (7) of the transmitting device (2) to the transponder (5) of the operating device (1),
displaying a building/room plan on a touch-sensitive screen of the transmitting device (2),
detecting a user operation for marking the position of the emergency light in the displayed building/room plan by tapping the touch-sensitive screen, and
linking the network address to the marked position and storing the network address linked to the marked position by the control unit (10).

## Revendications

1. Appareil émetteur (2) permettant l'émission de données de commande à un transpondeur (5) d'un appareil de service (1) d'un luminaire de secours, dans lequel
le luminaire de secours est mis en marche en cas de fonctionnement sur secteur, lorsque le luminaire de secours fonctionne dans le mode permanent ;
le luminaire de secours est mis hors tension en cas de fonctionnement sur secteur et mis en marche en cas de panne de courant, lorsque le luminaire de secours fonctionne dans le mode veille ;
l'appareil émetteur (2) présente une unité de commande (10), un émetteur (7), une unité d'affichage (8) et une unité d'entrée (9), **caractérisé en ce que**
l'unité d'entrée (9) est réalisée pour l'entrée ou la sélection d'un mode permanent ou d'un mode de veille par un utilisateur,
l'unité de commande (10) est réalisée pour générer les données de commande pour une configuration de l'appareil de service (1) de manière correspondant au mode permanent ou au mode de veille entré ou sélectionné par l'utilisateur,
l'émetteur (7) est réalisé pour émettre les données de commande générées au transpondeur (5) de l'appareil de service (1),
l'émetteur (7) est réalisé pour émettre au transpondeur (5) de l'appareil de service (1) une adresse de réseau avec laquelle le luminaire de secours peut être identifié par rapport à d'autres composants (1a..1h) d'un système d'éclairage,
l'unité d'affichage (8) présente un écran tactile pour l'affichage d'un plan de bâtiment/d'espace et pour le marquage de la position du luminaire de secours dans le plan de bâtiment/d'espace affiché en touchant l'écran tactile par l'utilisateur, et
l'unité de commande (10) est réalisée pour associer l'adresse de réseau à la position marquée et pour l'enregistrer.

2. Procédé d'émission de données de commande d'un appareil émetteur (2) à un transpondeur (5) d'un appareil de service (1) d'un luminaire de secours, comportant les étapes :
d'entrée ou de sélection par un utilisateur d'un mode permanent ou d'un mode de veille dans lequel le luminaire de secours peut fonctionner, au moyen d'une unité d'entrée (9) de l'appareil émetteur (2), dans lequel le luminaire de secours est mis en marche en cas de fonctionnement sur secteur lorsque le luminaire de secours fonctionne en mode permanent, et le luminaire de secours est mis hors tension en cas de fonctionnement sur secteur et mis en marche en cas de panne de courant lorsque le luminaire de secours fonctionne en mode de veille ;
de génération des données de commande à partir d'une unité de commande (10) de l'appareil émetteur (2) pour une configuration de l'appareil de service (1) de manière correspondant au mode permanent ou au mode de veille entré ou sélectionné par l'utilisateur ; et
d'émission des données de commande par un émetteur (7) de l'appareil émetteur (2) au transpondeur (5) de l'appareil de service (1), dans lequel le procédé présente en outre les étapes suivantes :
émission d'une adresse de réseau, avec laquelle le luminaire de secours peut être identifié par rapport à d'autres composants (1a..1h) d'un système d'éclairage, de l'émetteur (7) de l'appareil émetteur (2) au transpondeur (5) de l'appareil de service (1),
affichage d'un plan du bâtiment/d'espace sur un écran tactile de l'appareil émetteur (2),
détection d'une opération de l'utilisateur pour marquer la position du luminaire de secours dans le plan de bâtiment/d'espace affiché en touchant l'écran tactile, et
association de l'adresse de réseau à la position marquée et enregistrement de l'adresse de réseau associée à la position marquée par l'unité de commande (10).
